# FASCICULE DE BREVET EUROPEEN

(11) **EP 0 497 869 B1**
(45) Date de publication et mention de la délivrance du brevet: **21.09.1994**
(21) Numéro de dépôt: 90916492.3
(22) Date de dépôt: 25.10.1990
(51) Int. Cl.: A01K 1/01

(54) **CAISSE DESTINEE A RECEVOIR LES DEJECTIONS D'ANIMAUX DOMESTIQUES**
BEHÄLTER ZUR AUFNAHME VON HAUSTIERKOT
BOX FOR DOMESTIC ANIMAL EXCREMENT

(30) Priorité: 25.10.1989 FR 8914008
(43) Date de publication de la demande: 12.08.1992
(73) Titulaire: PAGES, Marc, 66100 Perpignan (FR)
(72) Inventeur: PAGES, Marc, 66100 Perpignan (FR)
(86) Numéro de dépôt international: FR9000772
(87) Numéro de publication internationale: WO9106209

(56) Documents cités:
- US-A- 4 548 160
- US-A- 4 787 335
- US-A- 4 788 935
- US-A- 4 819 580

## Description

La présente invention concerne une caisse destinée à recevoir les déjections d'animaux domestiques tels que des chats.

Les caisses pour litières de chats ou autres animaux domestiques sont généralement constituées en matière synthétique ou en métal protégé de la corrosion.

Le propriétaire de l'animal doit veiller au remplacement régulier de la litière et est contraint avant mise en place d'une nouvelle litière à un nettoyage de la caisse.

Pour apporter remède à cette contrainte, on a précédemment mis en oeuvre des caisses en carton recevant une litière appropriée et destinée à être jetée avec la litière usagée.
Cependant, le manque d'étancheïté de ces caisses en carton rend difficile leur emploi.

On peut cependant remédier à ce problème en enserrant une caisse en carton dans un sac étanche obturé après introduction de la dite caisse et conformé en sorte de venir épouser le contour du volume interne et externe de la caisse en carton.
Une telle solution est notamment enseignée dans le brevet US 4 819 580. Cependant, la mise en oeuvre d'une telle solution exige l'emploi d'un sac préformé.
De plus, une telle caisse présente l'inconvénient d'être fragile si bien que la déformation de ses parois est à craindre si le transport par lot de plusieurs ou bien le stockage sont effectués dans de mauvaises conditions.

Une caisse en carton selon le brevet US-A-4 788 935 est réalisée par découpage dans une feuille en carton et est conformée en sorte que ces différentes parties soient repliables les unes sur les autres de façon à former pour le transport, le stockage et la commercialisation un ensemble plat.
Cette disposition apporte donc une solution au problème sus-évoqué.

Après déploiement, les différentes parois définissent un volume sensiblement parallèlèpipèdique qui sera recouvert par un sac étanche.
Une telle caisse n'est plus ouverte en partie supérieure et présente par contre une ouverture latérale.

La tenue des différentes parois suivant la configuration d'un parallèlèpipède est obtenue par mise en tension du sac.

A cet effet, la bordure de l'ouverture de ce dernier présente un cordon de mise en tension.

Un des inconvénients d'une telle caisse réside dans le fait qu'elle utilise un sac de forme spécifique, ce qui n'est pas de nature à réduire son coût.

Un autre inconvénient de cette caisse réside dans le fait que son volume interne doit être suffisamment important pour que l'animal domestique puisse s'y tenir sans aucune gêne.

On connait également du brevet US-A-4,548,160. Une caisse en carton destinée à contenir une litière pour chat.

Cette caisse est formée par pliage d'une feuille en carton et comprend une base destinée à former le fond de la caisse et quatre panneaux adjacents à la base destinés après pliage à former les parois latérales de la caisse.

Ces panneaux sont formés par plusieurs volets réunis les uns aux autres par des lignes de pliage horizontales.
Après constitution de la caisse, les volets inférieurs se développent perpendiculairement par rapport au fond de la caisse et forment avec le fond le volume utile de ladite caisse lequel reçoit la litère. Les autres volets de chaque panneau se développent au dessus du volet inférieur et forment entre eux un dièdre.

Cette caisse ne reçoit pas un sac imperméable assurant son étanchéité.

La présente invention a pour objet de pallier les inconvénients sus-évoqués en proposant une nouvelle caisse, réalisée en carton destinée à être jetée avec une litière usagée et pour laquelle l'étancheïté est réalisée à l'aide d'un sac du commerce, par exemple.

A cet effet, la caisse destinée à recevoir les déjections des animaux domestiques, destinée à être jetée après usage de la litière qu'elle reçoit et formée par pliage d'une pièce (1) obtenue par découpage d'une feuille en carton, la pièce (1) étant le développement de la caisse sur un plan, et comprend une base (2) en forme de quadrilatère régulier, destinée à constituer le fond de la caisse et quatre panneaux (15), (16) adjacents à la base répartis autour de cette dernière, destinés à former les quatres parois latérales de la dite caisse, les quatre panneaux (15), (16) étant respectivement raccordés aux quatre côtés de la base, lesquels forment lignes de pliage et étant constitués chacun de deux volets épousant chacun le contour d'un quadrilatère régulier dont un est interne (3) ou (12) et l'autre externe (4) ou (10) séparés l'un de l'autre par une ligne de pliage parallèle à la ligne (9) de pliage du panneau à la base (2), les volets internes, après pliage, étant destinés à délimiter avec la base le volume interne de la caisse et les volets externes comportant des moyens de liaison les uns aux autres qui coopèrent ensemble en liaison après pliage de la boite, la dite caisse étant pourvue d'un sac (14) en matière synthétique imperméable qui assure son étanchéïté en venant en recouvrement des faces externes du fond (2) de la caisse et des volets internes (3) ou (12) la dite caisse étant caractérisée essentiellement en ce que les volets externes (4), (10) lors de la constitution de la caisse par pliage sont rabattus en regard de la face externe de leur volet interne (3) ou (12) respectif, que les volets internes (3), (12) et externes (4), (10) délimitent un volume périmétrique et que le sac (14) après constitution de la caisse par pliage est replié sur lui-même et est logé dans le volume périmétrique, le dit sac étant destiné par la suite, après usage de la litière, à être extrait du volume interne et déployé de façon que la caisse et la litière usagée qu'elle contient puissent être totalement logées dans le volume interne du sac déployé, ce qui forme un ensemble prêt à être jeté.

Suivant une autre caractéristique de l'invention, les volets interne et externe des panneaux de la forme à partir du pliage de laquelle la caisse est réalisée épousent chacun le contour d'un trapèze isocèle, les deux volets interne et externe étant réunis l'un à l'autre par la petite base du trapèze suivant lequel chacun se développe, la grande base du trapèze du volet interne occupant toute la longueur du côté de la base auquel le panneau se raccorde.

D'autres avantages et caractéristiques de l'invention apparaîtront à la lecture de la description d'une forme préférée de réalisation en se reférant aux dessins annexés en lesquels :
- la figure 1 est une vue en plan de la pièce à partir du pliage de laquelle est réalisée la caisse,

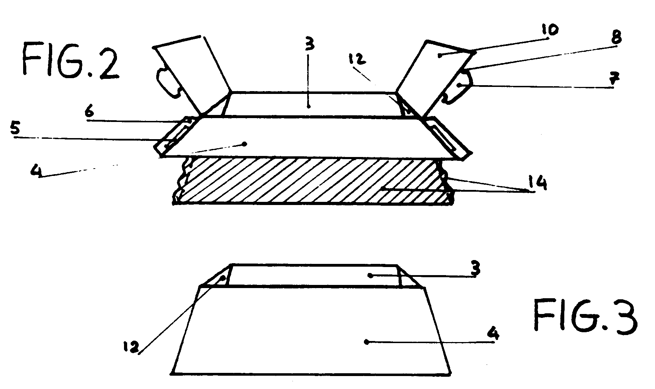

- la figure 2 représente une étape du montage de la caisse,
- la figure 3 représente la forme définitive de la caisse après montage,

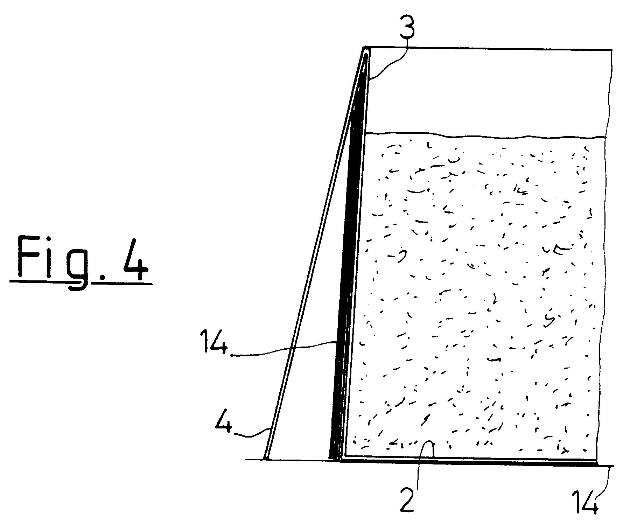

- la figure 4 est une vue en coupe partielle de la caisse suivant un plan vertical.

Telle que représentée, la caisse selon l'invention, destinée à recevoir les déjections d'animaux domestiques tels que chats et autres animaux de petite taille, et destinée à être jetée après usage de la litière qu'elle reçoit, est formée par pliage d'une pièce 1 obtenue par découpage d'une feuille de préférence en carton, la dite pièce 1 étant comme on le comprend le développement sur un plan des parties de la dite caisse.

Conformément à l'invention, la caisse comporte un sac 14 de façon à assurer son étancheïté. Ce sac est de préférence constitué en une matière synthétique connue pour ses qualités d'imperméabilité. Avantageusement, il sera utilisé un sac du commerce du type de ceux destinés à recevoir des ordures ménagères mais il est bien évident qu'il pourra être utilisé un sac spécialement conçu pour cette application.

Après usage de la litière, le sac équipant la caisse sera totalement déployé autour de cette dernière et l'ensemble ainsi constitué pourra être jeté dans un endroit approprié.

Conformément à l'invention, la pièce 1 à partir de laquelle la caisse 1 est constituée par pliage comprend une base 2 en forme de quadrilatère régulier destinée à constituer le fond de la caisse et quatre panneaux 15, 16 adjacents à la base et répartis autour de cette dernière destinés à former les parois latérales de la caisse.
A titre d'exemple, cette base est de forme rectangulaire mais elle peut être carrée.

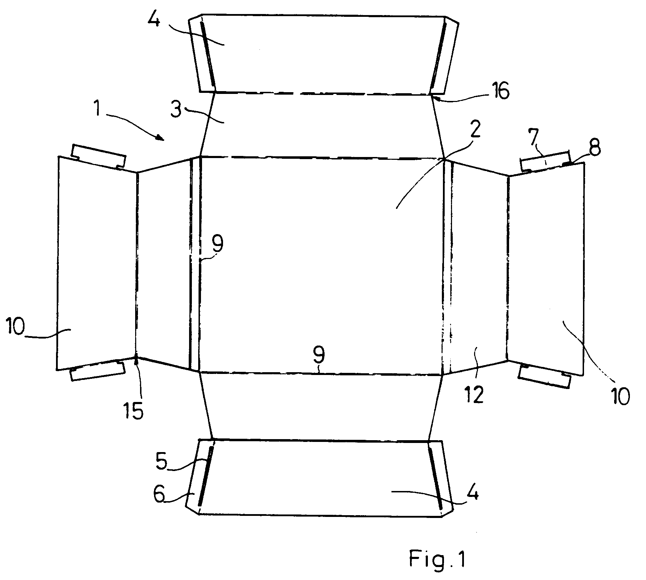

Comme on peut le voir sur la figure 1, les panneaux formant avec la base un ensemble d'un seul tenant sont raccordés respectivement aux quatre côtés de la base, lesquels forment les lignes de pliage 9 des dits panneaux 15 et 16.

Selon la forme préférée de réalisation, chacun des panneaux 15, 16 est constitué de deux volets dont un est interne 3 ou 12 et l'autre externe 4 ou 10, ces dits volets étant séparés l'un de l'autre par une ligne de pliage.
Cette ligne de pliage est parallèle à la ligne de pliage 9 du panneaeu à la base.
Les volets interne et externe épousent le contour d'un quadrilatère régulier.

Après pliage, les volets internes délimitent avec la base le volume interne de la caisse, lequel reçoit une litière appropriée à l'animal.
Les volets externes quant à eux se rabattent, en regard de la face externe de leur volet respectif 3 ou 12 et ils comportent des moyens de liaison les uns aux autres qui coopèrent ensemble en liaison après pliage de la boite de façon que cette dernière puisse conserver sa forme.
De tels moyens de liaison seront décrits plus après.

Le sac 14 vient en recouvrement des faces externes de la base et des volets internes et est replié sur lui-même de façon à être enserré entre les dits volets internes et externes.
Plus précisément, après formation de la caisse, les volets internes 3, 12 et externes 4, 10 délimitent un volume périmétrique dans lequel est disposé le sac 14, ce sac 14 venant occuper toute la hauteur de ce volume périmétrique.

Il est à noter que ce sac 14 forme une ceinture périmétrique propice à améliorer la rigidité de la caisse.

Les moyens de liaison des volets externes les uns aux autres sont constitués, selon une forme préférée de réalisation, par plusieurs languettes 7 en saillie sur les côtés latéraux des volets externes de deux panneaux opposés et par des fentes 5 pratiquées dans des pattes 6 en saillie sur les côtés latéraux des volets externes des autres panneaux, les dites fentes 6 étant destinées à recevoir chacune la languette du volet adjacent.
On remarquera que chaque languette 7 comporte deux encoches 8 de façon à assurer une meilleure coopération avec la fente dans laquelle elle s'engage.

Il est bien évident que ces moyens de liaison ne sont décrits qu'à titre d'exemple et que les volets externes de la caisse pourront être équipés de tous autres moyens de liaison.

Selon la forme préférée de réalisation, les faces internes des parois latérales de la caisse constituées par les volets internes sont inclinées vers le centre de la base. Cette forme de réalisation est de nature à mieux retenir les grains de la litière dans le volume interne de la caisse.

On voit donc que cette disposition conduit à former une caisse dont le volume interne est plus large au niveau du fond qu'au niveau de l'ouverture.

On conçoit également que cette disposition conduit à déporter la bordure de l'ouverture, au droit du fond de la caisse et donc au droit du polygone de sustentation que la caisse définit.

Pour que la caisse puisse présenter une section plus étroite au niveau de l'ouverture qu'au niveau de la base, les volets internes 3 et 12 et externes 4 et 10 épousent chacun le contour d'un trapèze isocèle, et les deux volets interne et externe de chaque panneau sont réunis l'un à l'autre par la petite base du trapèze suivant lequel chacun d'eux se développe.
La grande base du trapèze formé par le volet interne occupe toute la longueur du côté de la base auquel se raccorde le panneau.

Selon la forme préférée de réalisation, le trapèze isocèle suivant lequel se développe le volet externe de chaque panneau présente une hauteur plus importante que celle du panneau interne et les volets externes, après réalisation de la caisse, viennent par leur grande base en appui sur le sol, et s'écartent angulairement du volet interne.
Une telle disposition permet d'accroître l'aire du polygone de sustentation et de renforcer la rigidité de la caisse.
Avec une telle forme de réalisation, le volume périmétrique délimité par les volets internes (3), (12) et externes (4) et (10) présente une section droite triangulaire.

Comme dit précédemment, le sac 14 est dans ce volume replié sur lui-même et assure l'étancheïté de la caisse. Ce sac est de plus enserré par les volets internes et externes.
En outre, pour des raisons qui seront évoquées plus après, la longueur du sac (déplié) est supérieure à la hauteur de la caisse.

Il est à noter que le sac après mise en place dans le volume constitue une ceinture, ce qui renforce encore la rigidité de la caisse.

Le sac 14 pourra en outre être collé sur la face externe de la base.

Après usage de la litière, l'utilisateur pourra désassembler les volets externes les uns des autres et les rabattre vers la litière, ce qui permettra le dégagement du sac.
L'utilisateur pourra alors déployer ce dernier par traction vers le haut de façon que la caisse soit entièrement logée dans le volume interne du sac déployé.

Après obturation du sac, l'ensemble formé pourra être jeté.

La caisse telle que décrite peut être commercialisée entièrement érigée mais de préférence pour des raisons de facilité de transport et de stockage, elle est commercialisée repliée sur elle-même de façon à former un ensemble plat.
En d'autres termes, les différents panneaux de la caisse viennent se rabattre sur une des faces de la base.

Eventuellement, pour faciliter le repliement des panneaux sur la base, il pourra être prévu sur au moins deux d'entre eux au moins une ligne de pliage supplémentaire.
Préférentiellement, les panneaux concernés seront deux panneaux opposés et la ligne de pliage supplémentaire que chacun d'eux comportera, sera pratiquée sur le volet interne parallèlement à la ligne de pliage 9 du dit panneau à la dite base.
De préférence, le carton de la caisse reçoit un traitement approprié à cette application.

## Revendications

1. Caisse destinée à recevoir les déjections des animaux domestiques et destinée à être jetée après usage de la litière qu'elle reçoit, la dite caisse étant formée par pliage d'une pièce (1) obtenue par découpage d'une feuille en carton, la pièce (1) étant le développement de la caisse sur un plan, et comprend une base (2) en forme de quadrilatère régulier, destinée à constituer le fond de la caisse et quatre panneaux (15), (16) adjacents à la base répartis autour de cette dernière, destinés à former les quatres parois latérales de la dite caisse, les quatre panneaux (15), (16) étant respectivement raccordés aux quatre côtés de la base, lesquels forment lignes de pliage et étant constitués chacun de deux volets épousant chacun le contour d'un quadrilatère régulier dont un est interne (3) ou (12) et l'autre externe (4) ou (10) séparés l'un de l'autre par une ligne de pliage parallèle à la ligne (9) de pliage du panneau à la base (2), les volets internes, après pliage, étant destinés à délimiter avec la base le volume interne de la caisse et les volets externes comportant des moyens de liaison les uns aux autres qui coopèrent ensemble en liaison après pliage de la boite, la dite caisse étant pourvue d'un sac (14) en matière synthétique imperméable qui assure son étanchéïté en venant en recouvrement des faces externes du fond (2) de la caisse et des volets internes (3) ou (12) la dite caisse étant caractérisée en ce que les volets externes (4), (10) lors de la constitution de la caisse par pliage sont rabattus en regard de la face externe de leur volet interne (3) ou (12) respectif, que les volets internes (3), (12) et externes délimitent un volume périmétrique et que le sac (14) après constitution de la caisse par pliage est replié sur lui-même et est logé dans le volume périmétrique, le dit sac étant destiné par la suite, après usage de la litière à être extrait du volume interne et déployé de façon que la caisse et la litière usagée qu'elle contient puissent être totalement logées dans le volume interne du sac déployé, ce qui forme un ensemble prêt à être jeté.

2. Caisse selon la revendication 1 caractérisée en ce que les volets internes et externes des panneaux de la forme à partir du pliage de laquelle elle est réalisée épousent chacun le contour d'un trapèze isocèle, les deux volets interne et externe étant réunis l'un à l'autre par la petite base du trapèze suivant lequel chacun se développe, la grande base du trapèze du volet interne occupant toute la longueur du côté de la base auquel le panneau se raccorde.

3. Caisse selon la revendication 2 caractérisée en ce que le trapèze isocèle suivant lequel se développe, chacun des volets externes présente une hauteur plus importante que la hauteur du trapèze isocèle suivant lequel se développe chacun des volets internes.

4. Caisse selon les revendications 1 et 2 caractérisée en ce que les quatre volets internes (3) et (12) (après constitution de la dite caisse par pliage) sont inclinés vers le centre de la base (2), le volume interne de la dite caisse étant plus large au niveau de la base qu'au niveau de l'ouverture de la caisse.

5. Caisse selon les revendications 1 et 3 caractérisée en ce que le volume périmétrique délimité par les volets internes (3), (12) et externes (4), (10) dans lequel est disposé le sac (14) présente une section transversale triangulaire.

6. Caisse selon les revendications 1 et 5 caractérisée en ce que le sac (14) est collé sur la face externe de la base (2).

7. Caisse selon les revendications 1 et 5 caractérisée en ce que le sac (14) forme après réalisation de la caisse par pliage de la pièce (1) une ceinture périmétrique propice à améliorer la rigidité de la caisse.

8. Caisse selon les revendications 1 et 3 caractérisée en ce que les volets externes (4), (10) après réalisation de la caisse viennent en appui sur le sol.

## Claims

1. A disposable box designed to receive the waste products of domestic animals and to be thrown out after usage The said box being formed by the folding of of a pre-cut sheet of cardboard (1), the sheet being the development of the box on a plan, and composed of a rectangular base (2) designed to be the botom of the box, and four panels (15) adjacent (16) to the base, and surrounding it. Designed to be the lateral inside walls of the box, the four panels (15), (16) being respectively soined to the four sides of the base, forming folding lines, and each one being formed from two flaps each one joining the contour of a regular quadrilateral of which, one is internal (3) or (12) and the other (4) or (10) is external seprated from one another by a folding line parallel to the folding liine (9) of the base panel (2), the infernal flaps afterfolding, being designed to delimit with the base ther internal volume of fthe box and the little external panels, having means of attachement one with another which work together after folding of the box, the said box being provided with a plactic waterproof bag assuring watertightness by covering the external sides of the bottom (2) of the box and the internal flaps (3) ou (12), the said box being characterised in that the external flaps (4) (10) face each other (3) ou (12) while the box is formed by folding, the internal panels (3) or (12) and that the external panels delimit a perimetrical volume and that the bag (14) after forming the bax by folding is folded on to itself and is placed in the perimetrical volume. The said bag being designe after using of the litter, to be tacken out of the internal volume in a manner that the box and the used liter can be totally placed in ther inernal volume of the bag, forming a single package to be disposed of.

2. Box according to the demand 1 characterised in that the internal and external flaps of the panels of the box which, when folder form the shape of a (isocelis) trapeze the two internal and external flaps being doined to each other at the shall base of each trapeze. The long base of the internal flap occupied all the length of the side of the base to which the panel is doined.

3. Box according to the demand 2 characterised in that the external trapezoïdal are developped to be highez flaps than the height of the internal trapezoïdal flaps.

4. Box according to the demand 1 and 2 characterised in that the four internal flaps (3) and (12) (after forning the box) are inclined to the ceneter of the base (2).
The infernal volume of the box being larger at the base level than at the opening level of the box.

5. Box according to the demande and 3 characterised in that the perimetrical volume delimited by the internal flaps (3), (12) and externals flaps (4), (10) in which is placed the bag (14) present a transverse triangular section.

6. Box according to the demand 1 and 5 characterised in that. The bag (14) is attached to the external side of the base (2).

7. Box according to the demand 1 and 5 characterised in that after the box is formed by folding the cardboard piece, the bag forms a perimetrical belt favorable to the improvement of the sturdiness of the box.

8. Box according to the demand 1 and 3 chariterised in that after the formation of the box, the external flaps rest on the ground.

## Patentansprüche

1. Eine Kiste, die dazu bestimmt ist, die Exkremente der Haustiere aufzunehmen und nach Gebrauch zusammen mit der angesammelten Streu weggeworfen werden kann. Die genannte Kiste entsteht beim Zusammenfalten eines Stück Kartons, (1), das entsprechend zugeschnitten ist und somit den Plan zum Zusammenfügen dieser Kiste bildet, mit einer Basis (2) in Form eines Rechtecks als Grundlage der Kiste und vier Paneelen (15), (16), die mit der Basis verbunden sind und dieses Rechteck von vier Seiten umgeben, so daß auf diese Weise die vier Seitenwände der genannten Kiste entstehen. Die vier Paneele (15), (16) sind entsprechend mit den vier Seien der Basis verbunden, die gleichmäßig gefaltet sind, und jedes Paneel besteht aus zwei Klappen, die wiederum jeweils die Kontur eines Rechtecks annehmen, mit einer Innenseite (3) oder (12) und einer Außenseite (4) oder (10), die sich durch eine Trennlinie unterscheiden und parallel liegen zur Basis (2), die ebenfalls an den vier Seiten des Rechtecks gefaltet ist (9). Die nach innen gewandten Klappen bestimmen, zusammen mit der Basis, den Innenumfang der Kiste, und die nach außen gewandten Klappen können anhand von Verbindungsgliedern zusammengefügt werden, so daß eine einheitlich gefaltete Kiste entsteht. Die genannte Kiste ist mit einem Sack (14) aus synthetischem Material ausgestattet. der wasserundurchlässig ist und somit eine Abdichtung garantiert, indem er die Außenfläche des Kistenbodens (2) und die nach innen gewandten Klappen (3) oder (12) bedeckt. Charakteristisch für diese Kiste sind die Außenklappen (4), (10), die nachdem die Kiste richtig zusammengefügt ist, über die Außenseite der jeweiligen inneren Klappen (3) oder (12) gefaltet werden. Zwischen den Innenklappen (3), (12) und den Außenklappen bildet sich so ein Volumen, das die vier Seiten einschließt, und der umgestülpte Sack (14) wird, nachdem die Kiste vorschriftsmäßig gefaltet ist, in dieses begrenzte Volumen plaziert. Es ergibt sich, daß dieser Sack nach Gebrauch der Streu aus dem Innenvolumen herausgenommen wird, und auf diese Weise können die Kiste und die darin befindliche abgenutzte Streu vollständig in dem Innenvolumen des entfalteten Sacks untergebracht werden, und das Ganze ist dann wegwerfbereit.

2. Gemäß Anspruch 1 ist die Kiste dadurch charakterisiert, daß die Innen- und Außenklappen der Paneele des Formgebildes, das durch den Faltvorgang diese Kiste realisiert, jeweils die Kontur eines gleichschenkligen Trapezes bilden, Die beiden Innen- und Außenklappen werden zusammengefügt durch eine kleine Verlängerung des jeweils so entstandenen Trapezes, wobei die große Seite der Innenklappe des Trapezes mit der Seitenlänge der Basis übereinstimmt, die mit dem Paneel verbunden ist.

3. Gemäß Anspruch 2 ist diese, aus einem gleichschenkligen Trapez bestehende Kiste so charakterisiert, daß jede der Außenklappen bedeutend höher ist als die jeweiligen Innenklappen des gleichschenkligen Trapezes.

4. Gemäß Anspruch 1 und 2 folgt, daß die vier Innenklappen (3) und (12) der Kiste (nachdem diese entsprechend gefaltet wurde) zum Zentrum des Bodens (2) neigen, und somit ist das Innenvolumen der genannten Kiste für die Fläche des Kistenbodens größer als für die Fläche der Kistenöffnung.

5. Diese Kiste ist gemäß den Ansprüchen 1 und 3 dadurch charakterisiert, daß der durch die inneren (3), (12) und äußeren Klappen (4), (10) begrenzte Rauminhalt, in welchem der Sack (14) disponiert ist, einen dreieckigen Querschnitt zeigt.

6. Gemäß den Ansprüchen 1 und 5 ist diese Kiste dadurch charakterisiert, daß der Sack (14) auf die Außenfläche des Kistenbodens geklebt wird.

7. Diese Kiste ist gemäß den Ansprüchen 1 und 5 dadurch charakterisiert, daß der Sack (14), nachdem die Kiste aus einem Stück (1) zusammengefaltet wurde, den Kistenumfang wie ein Gürtel umschließt und somit geeignet ist, die Haltbarkeit der Kiste zu verbessern.

8. Gemäß den Ansprüchen 1 und 3 ist die Kiste dadurch charakterisiert, daß die Außenklappen (4), (10) nach Zusammenstellen der Kiste fest auf dem Boden stehen können.
